# EUROPEAN PATENT SPECIFICATION

(11) **EP 4 518 115 B1**
(45) Date of publication and mention of the grant of the patent: **24.09.2025**
(21) Application number: 24153475.9
(22) Date of filing: 23.01.2024
(51) Int. Cl.: H02K 15/02, B05B 13/02, B05B 13/06, B05C 5/02, B05C 11/06

(54) **STRENGTHENING METHOD OF MOTOR SILICON STEEL SHEETS AND LAMINATED STRUCTURE OF SILICON STEEL SHEETS**
VERFAHREN ZUR VERSTÄRKUNG VON SILIZIUM-MOTORSTAHLBLECHEN UND SCHICHTSTRUKTUR VON SILIZIUMSTAHLBLECHEN
PROCÉDÉ DE RENFORCEMENT DE TÔLES D'ACIER AU SILICIUM POUR MOTEUR ET STRUCTURE STRATIFIÉE DE TÔLES D'ACIER AU SILICIUM

(30) Priority: 30.08.2023 CN 202311101333
(43) Date of publication of application: 05.03.2025
(73) Proprietor: Delta Electronics, Inc., Taoyuan City 333 (TW)
(72) Inventor: SIA, Sheng-Qiang, Taoyuan 333 (TW); CHIU, Chih-Wei, Taoyuan 333 (TW); LIN, Hsing-Cheng, Taoyuan 333 (TW)
(74) Representative: Nederlandsch Octrooibureau

(56) References cited:
- KR-A- 20210 147 421
- US-A- 3 299 304
- US-A1- 2016 151 801
- US-A1- 2022 028 608
- US-A1- 2023 253 140

## Description

### BACKGROUND

### Field of Disclosure

The present disclosure relates to a strengthening method for motor silicon steel sheets and a laminated structure of silicon steel sheets, particularly to a method for strengthening silicon steel sheets with adhesive to prevent warping of silicon steel sheets and a laminated structure for silicon steel sheets reinforced with adhesive.

### Description of Related Art

Conventionally, in order to reduce the manufacturing time and cost of the stator silicon steel sheets, an anchor point is punched out in a specific area for each silicon steel sheet during the stamping process, and then the silicon steel sheet is stamped and formed according to the continuous stamping sequence, and the silicon steel sheets are then stacked layer by layer according to the required quantity, weight or stacking rate to form a stator or rotor. After the stacking process is completed, a welding process may be applied at an outer diameter of the stator or rotor to fix it. Compared with using adhesive to coat silicon steel sheets, this welding process only fixes specific areas, so it cannot prevent the stator or rotor from deformation or even warpage due to thermal stress release and external force in the subsequent process. It will also indirectly cause additional costs. At present, in the post-production process of a finished stator silicon steel sheet (such as insulating paper insertion or copper wire insertion, etc.), it is unavoidable to apply an external force to the silicon steel sheets due to the equipment of external mechanical components, which will cause damage to the stator or rotor silicon steel sheet. The generation of internal stress and thermal stress release may cause deformation or warping of few pieces at the top and at the bottom of the stator silicon steel laminated structure. The documents US 2023/253140 A1, US 2022/028608 A1, and US 3 299 304 A are part of the relevant prior art on methods for applying adhesive to stator lamination stack.

### SUMMARY

The present disclosure provides a strengthening method for motor silicon steel sheets and a laminated structure of silicon steel sheets to deal with the needs of the prior art problems.

In one or more embodiments, a strengthening method for motor silicon steel sheets includes the following steps; (A) providing a silicon steel laminated structure that comprises a plurality of silicon steel sheets aligned and stacked with each other; (B) rotating the silicon steel laminated structure at a speed; (C) when the silicon steel laminated structure rotates, outputting a liquid adhesive to an upper surface of an uppermost silicon steel sheet of the silicon steel laminated structure at a first position in a rotation direction of the silicon steel laminated structure; (D) when the silicon steel laminated structure rotates, blowing air to the liquid adhesive at a first included angle at a second position in the rotation direction of the silicon steel laminated structure, such that the liquid adhesive is gathered to a boot portion of a stator tooth of the uppermost silicon steel sheet of the silicon steel laminated structure; and (E) when the silicon steel laminated structure rotates, blowing air to the liquid adhesive at a second included angle at a third position in the rotation direction of the silicon steel laminated structure, such that the liquid adhesive flows downwards along an end face of the boot portion of the stator tooth of the uppermost silicon steel sheet of the silicon steel laminated structure.

In one or more embodiments, a silicon steel laminated structure includes a plurality of silicon steel sheets aligned and stacked with each other, wherein the aligned and stacked silicon steel sheets have two ends and a height H along an axial direction, and the silicon steel sheets, which are disposed within a quarter H from the two ends in the axial direction, are separated by adhesive layers in gaps between silicon steel sheets, wherein the adhesive layers are formed by applying a liquid adhesive to an upper surface of an uppermost silicon steel sheet of the silicon steel laminated structure when rotating the silicon steel laminated structure, then blowing air to the liquid adhesive to gather to a boot portion of a stator tooth of the uppermost silicon steel sheet of the silicon steel laminated structure, and then blowing air to the liquid adhesive on the upper surface, so that the liquid adhesive flows downwards along an end face of the boot portion of the stator tooth for the quarter H.

In sum, a strengthening method of the motor silicon steel sheets disclosed herein does not use a mold to apply glue to the silicon steel laminated structure as a whole, but uses the adhesive coating system to apply adhesive to a part of the silicon steel laminated structure, so that the upper and lower silicon steel sheets in such part are firmly bonded to prevent deformation or warping of the silicon steel laminated structure.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates an adhesive coating system according to one embodiment of the present disclosure;
Fig. 2 illustrates using an adhesive coating system to perform an adhesive coating process of motor silicon steel sheets according to one embodiment of the present disclosure;
Fig. 3 illustrates a flow chart of an adhesive coating method of motor silicon steel sheets according to one embodiment of the present disclosure;
Fig. 4 is a cross-sectional view illustrating a positional relationship between an adhesive output device of an adhesive coating system and a silicon steel laminated structure according to one embodiment of the present disclosure;
Fig. 5 is a cross-sectional view illustrating a positional relationship between an airflow output device of an adhesive coating system and a silicon steel laminated structure according to one embodiment of the present disclosure;
Fig. 6 is a cross-sectional view illustrating a positional relationship between another airflow output device of an adhesive coating system and a silicon steel laminated structure according to another embodiment of the present disclosure; and
Fig. 7 is a cross-sectional view illustrating a silicon steel laminated structure according to one embodiment of the present disclosure.

### DETAILED DESCRIPTION

Reference will now be made in detail to the present embodiments of the disclosure, examples of which are illustrated in the accompanying drawings. Wherever possible, the same reference numbers are used through the drawings and the description to refer to the same or like parts.

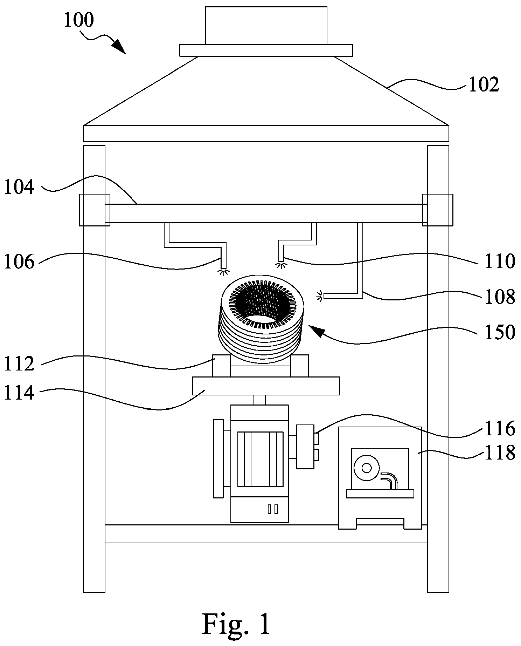

Reference is made to Fig. 1, which illustrates an adhesive coating system according to one embodiment of the present disclosure. An adhesive coating system 100 includes an exhaust hood 102, a lifting mechanism 104, an adhesive output device 106, an airflow output device 108, an airflow output device 110, a carrier plate 112, a rotating platform 114, a servo motor 116, a controller 118, and the like. The adhesive coating system 100 is used to perform an adhesive coating process on a silicon steel laminated structure 150. The exhaust hood 102 is used to remove volatile gases generated during the adhesive coating process. The adhesive output device 106, the airflow output device 108 and the airflow output device 110 are all fixed on the lifting mechanism 104 to control distances between these three devices and the silicon steel laminated structure 150. The carrier plate 112 is installed on the rotating platform 114 to carry and fix the silicon steel laminated structure 150 to achieve the centered rotation. When the rotating platform 114 rotates, the carrier plate 112 and the silicon steel laminated structure 150 can be driven to rotate together. A rotating shaft of the servo motor 116 is connected to the rotating platform 114 to provide a power source for rotating. The controller 118 is electrically connected to the adhesive output device 106, the airflow output device 108, the airflow output device 110 and the servo motor 116, thereby controlling the adhesive or airflow output speed or rotation speed of these four devices.

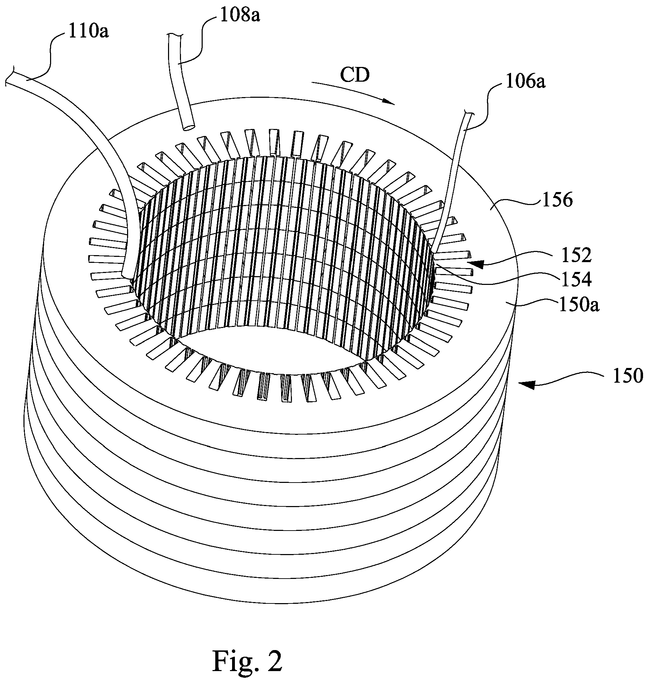

Reference is made to Figs. 1 and 2, and Fig. 2 illustrates using an adhesive coating system to perform an adhesive coating process of motor silicon steel sheets according to one embodiment of the present disclosure. When the rotating platform 114 of the adhesive coating system 100 drives the silicon steel laminated structure 150 to rotate, the adhesive output device 106, the airflow output device 108, and the airflow output device 110 can be used to perform the adhesive coating process of the motor silicon steel sheets. The adhesive output device 106 includes an output pipe or a nozzle 106a to output liquid adhesive to an upper surface of an uppermost silicon steel sheet 150a of the silicon steel laminated structure 150. In an embodiment of the present invention, the silicon steel laminated structure 150 includes a plurality of silicon steel sheets 150a of identical shapes that are aligned and stacked with each other, and the silicon steel laminated structure 150 may be a main portion of a motor stator or a motor rotor. In some embodiments of the present invention, when the silicon steel laminated structure is a main portion of the motor rotor, each silicon steel sheet has a plurality of magnet grooves, and when the silicon steel sheets are stacked and viewed in the axial direction, the magnet grooves are partially misaligned with each other to improve the magnetic performance. Fig. 2 only shows the silicon steel laminated structure of the motor stator, and is not intended to limit the present invention. When the silicon steel laminated structure 150 and the carrier plate 112 are driven by the rotating platform 114 to rotate in a rotation direction CD, the output pipe or the nozzle 106a can be used to drip or spray the liquid adhesive to the upper surface of the uppermost silicon steel sheet 150a. In some embodiments of the present invention, each stator silicon steel sheet includes an annular main body 156, and a plurality of stator teeth 152 are arranged at intervals from an inner edge of the main body 156 and extend radially toward a center of the silicon steel laminated structure 150, e.g. a center of the motor. On the inner edge of the main body 156, a pair of boot portions 154 are formed on the edge of each stator tooth 152 near the center, and an outer edge of the main body 156 defines an outer edge of the stator.

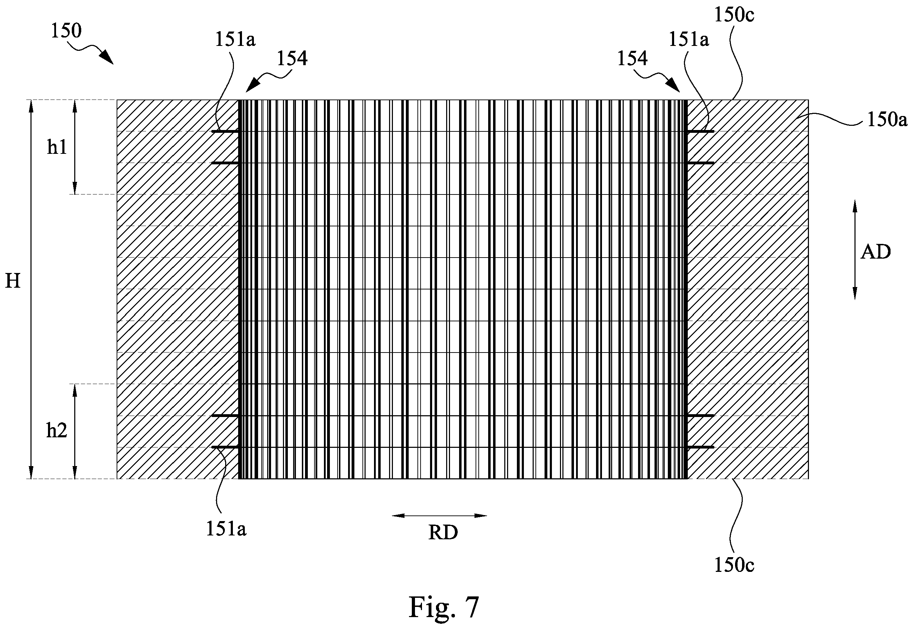

Referring again to Figs. 1 and 2, when the adhesive coating system is in operation, the silicon steel laminated structure 150 is driven by the carrier plate 112 to rotate in the rotation direction CD with a speed ranges from 1 rpm to 300 rpm. The rotation speed of the silicon steel laminated structure 150 should be matched with the conditions, such as a dripping or spraying speed of the liquid adhesive 151 and a concentration of the liquid adhesive 151, so as to output an appropriate amount of liquid adhesive 151 to the silicon steel sheet to save the usage of liquid adhesive 151 and/or control the curing time of the liquid adhesive 151. The airflow output device 108 includes a nozzle 108a and is located at a position different from the output pipe or nozzle 106a. When the silicon steel laminated structure 150 rotates, the airflow output device 108 is used to blow airflow or air to the liquid adhesive 151 on the upper surface of the uppermost silicon steel sheet 150a of the silicon steel laminated structure 150 after dripping or spraying the liquid adhesive 151 so that the liquid adhesive 151 is concentrated or gathered toward one side of the uppermost silicon steel sheet 150a of the silicon steel laminated structure 150 (for example, toward any position between the stator tooth 152 and the boot portion 154, or concentrated anywhere between the stator tooth 152 and the outer edge of the stator). The airflow output device 110 includes another nozzle 110a and is located at a different position from the nozzle 108a and the output pipe or nozzle 106a. When the silicon steel laminated structure 150 rotates, and the liquid adhesive 151 is concentrated or gathered on one side of the uppermost silicon steel sheet 150a. Then, the nozzle 110a blows airflow or air to the gathered liquid adhesive 151, so that the liquid adhesive is concentrated along the radially inner edge of the uppermost silicon steel sheet 150a of the silicon steel laminated structure 150 (i.e., the aforementioned "side"), and then flown downward along the axial direction (e.g., flown downward along the end face of the boot portion 154 of the stator tooth 152 facing the center, or flown downward along the side surface between adjacent stator teeth 152). When the liquid adhesive 151 flows downward, it can penetrate or fill multiple gaps between several adjacent-stacked silicon steel sheets to form multiple adhesive layers 151a (see Fig. 7) in the axial direction AD, and the adhesive layers 151a are solidified to achieve the purpose of bonding and strengthening the multi-layer silicon steel sheets and preventing the silicon steel sheets from warping. In some embodiments of the present invention, the output pipe or nozzle 106a, the nozzle 108a and the nozzle 110a are located at three different positions in the rotation direction CD of the silicon steel laminated structure 150 respectively, so that the liquid adhesive 151 can be output through the output pipe or nozzle 106a and then dripped or sprayed on the surface of the silicon steel sheet, and the liquid adhesive 151 is then blown from the nozzle 108a and the nozzle 110a to be evenly pushed to the different required positions of the silicon steel laminated structure 150, i.e., concentrated to a specific position and flown downward from the specific position. The arrangement, such as the spacing, between the output pipe or nozzle 106a, the nozzle 108a, and the nozzle 110a can be adjusted according to the sizes and/or rotational speed of the silicon steel laminated structure 150. In some embodiments of the present invention, a viscosity coefficient of the liquid adhesive can be less than 20 cP (centipoise) to facilitate blowing. In some embodiments of the present invention, the blowing pressure of the nozzle 108a and the nozzle 110a can be adjusted by the controller 118, and the pressure can be, for example, less than 10 MPa to avoid excessive pressure from blowing the liquid adhesive away from the surface of the silicon steel sheet.

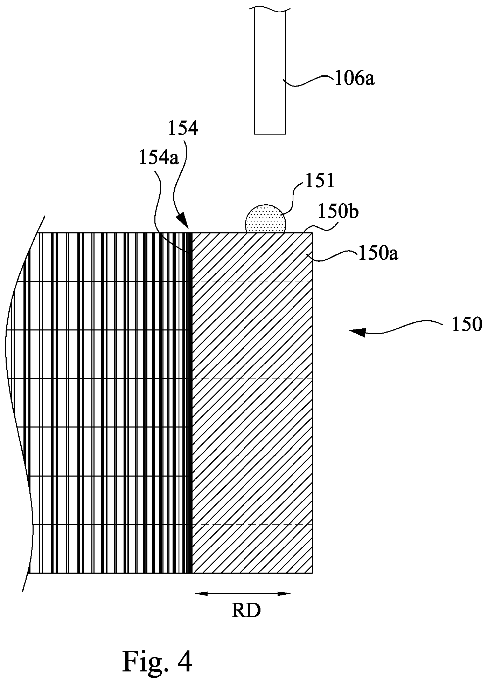

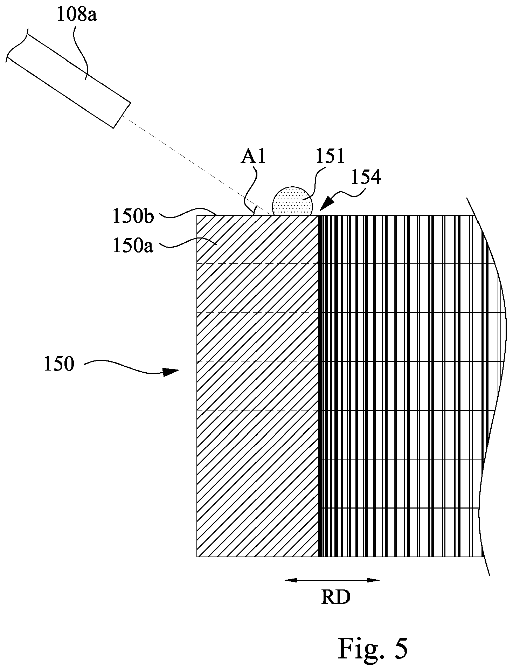

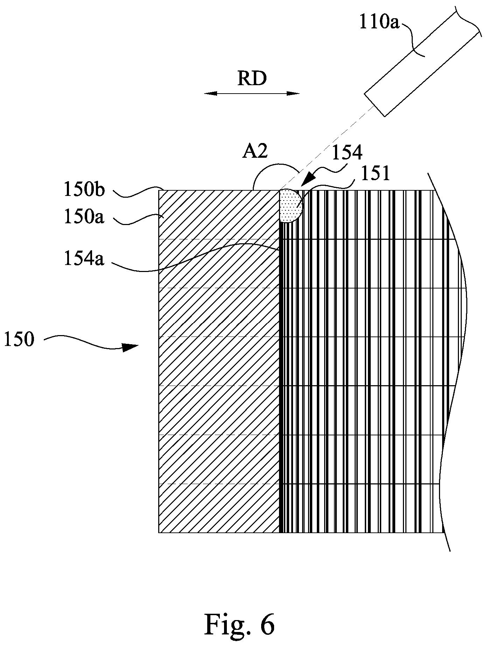

Reference is made to Figs. 1, 2 and 3, and Fig. 3 illustrates a flow chart of an adhesive coating method 300 of motor silicon steel sheets according to one embodiment of the present disclosure. In step S302 of the method 300, a silicon steel laminated structure 150 is provided in the adhesive coating system 100 for coating. The silicon steel laminated structure 150 includes a plurality of silicon steel sheets 150a of identical shapes that are aligned and stacked with each other. In some embodiments of the present invention, when the silicon steel laminated structure is a main portion of the motor rotor, each silicon steel sheet has a plurality of magnet grooves, and when the silicon steel sheets are stacked and viewed in the axial direction, the magnet grooves are partially misaligned with each other to improve the magnetic performance. Next, in step S304 of the method 300, the rotating platform 114 and the carrier plate 112 are used to rotate the silicon steel laminated structure 150 at a speed. In an embodiment of the present invention, the controller 118 is electrically connected to the servo motor 116 to control the silicon steel laminated structure 150 to rotate at a constant speed within the speed ranges from 1 rpm to 300 rpm, so that the rotation speed of the silicon steel laminated structure 150 can be matched with the dripping or spraying speed of the adhesive to achieve a better coating effect and control the usage of liquid adhesive 151. In step S306 of the method 300, when the silicon steel laminated structure 150 rotates, the output pipe or the nozzle 106a of the adhesive output device 106 is used to drip or spray at the first position in the rotation direction CD of the silicon steel laminated structure 150 to output the liquid adhesive 151 to the upper surface 150b of the uppermost silicon steel sheet 150a of the silicon steel laminated structure 150 (see FIG. 4). In an embodiment of the present invention, the first position is any position between the boot portion 154 and the stator tooth 152 in the radial direction. In other embodiments of the present invention, the first position can also be any position along the radial direction between the inner edge of the main body 156 bordering the stator tooth 152 and the outer side of the main body 156. In an embodiment of the present invention, the liquid adhesive 151 can be a quick-drying adhesive or an instant adhesive, and its viscosity coefficient should be less than 20cP (centipoise) so that it is easy to control the flow and distribution of the liquid adhesive by blowing air. In the step S308 of the method 300, when the silicon steel laminated structure 150 is rotated, the nozzle 108a of the airflow output device 108 blows air to the liquid adhesive 151 on the surface of the silicon steel sheet at the second position in the rotation direction CD of the silicon steel laminated structure 150 with the first included angle, so that the liquid adhesive 151 is concentrated or gathered toward the side of the uppermost silicon steel sheet 150a of the silicon steel laminated structure 150 (e.g., see Fig. 5, concentrated along the radial direction RD toward one side of the boot portion 154 of the stator tooth 152). In step S310 of the method 300, when the silicon steel laminated structure 150 rotates, and after the liquid adhesive 151 is concentrated on one side of the uppermost silicon steel sheet 150a, the nozzle 110a of the airflow output device 110 is used to blow air to the liquid adhesive 151 at the third position in the rotation direction CD of the silicon steel laminated structure 150 with a second included angle, so that the liquid adhesive 151 flows downward along the side of the uppermost silicon steel sheet of the silicon steel laminated structure 150 (e.g., see Fig. 6, flows downward along the end face 154a of the boot portion 154). In an embodiment of the present invention, the liquid adhesive 151 can also be concentrated on the side edges of the stator teeth 152 in step S308, and the liquid adhesive 151 can flow downward along the sides between adjacent stator teeth 152 in step S310. Steps S304, S306, S308, and S310 are executed until the entire inner circumferential area of the inner edges of the boot portions 154 in the circumferential direction is completely coated with adhesives, or the specific side positions between the stator teeth 152 are completely coated with adhesives. In addition, the adhesive coating system 100 can be used to apply adhesives to the gaps between the stacked silicon steel sheets 150a near the two ends 150c of the silicon steel laminated structure 150 to strengthen the silicon steel laminated structure 150 and avoid silicon steel sheets from being warped.

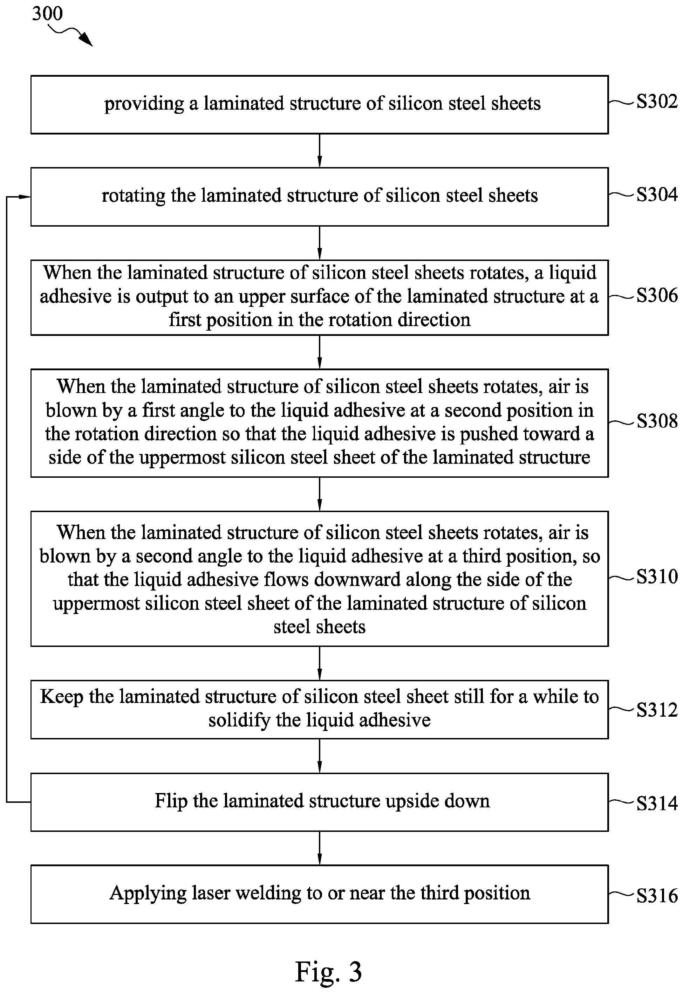

Referring again to Fig. 3, in order to achieve a better strengthening effect, the embodiment of the present invention further includes the step S314 of turning over or flip the silicon steel laminated structure 150 upside down after the step S310, so that another axial end of the silicon steel laminated structure 150 in the axial direction AD faces up (see Fig. 7 ), and steps S304, S306, S308, and S310 are further executed on the another axial end of the silicon steel laminated structure 150 in sequence until the entire inner circumferential area of the inner edges of the boot portions 154 in the circumferential direction is completely coated with adhesives, or the specific side positions between the stator teeth 152 are completely coated with adhesives. Furthermore, before the step S314 of turning over the silicon steel laminated structure 150, and after the step S310 of making the liquid adhesive 151 flown downward, it further includes the step S312 of keeping or maintaining the silicon steel laminated structure 150 still for a period of time to solidify the liquid adhesive 151, the period of time can be 1 to 300 minutes, depending upon the viscosity coefficient of the liquid adhesive 151, a thickness of the adhesive, a range of coating, and/or a temperature and humidity of the operating environment. Moreover, In some embodiments of the present invention, in order to further strengthen the structure, after the adhesive coating on both ends of the silicon steel laminated structure 150 is completed in step S314, an additional strengthening step S316, a laser welding is applied to the upper surface of the upper silicon steel sheet 150a of the two ends of the silicon steel laminated structure 150 can be added, so that the uppermost silicon steel sheets at both ends are tightly bonded to each other after being heated and melted to form a strengthening structure other than adhesive coating, thereby avoiding the silicon steel sheets from being warped. The location where the laser welding is applied is located at or adjacent to the third position, for example, the laser welding is applied at the end face of the boot portion 154, which is not intended to limit the present invention. It should be noted that the aforementioned step S312, step S314, and step S316 can be selectively implemented according to actual demand to achieve a better strengthening effect.

Reference is made to Fig. 4, which is a cross-sectional view illustrating a positional relationship between an adhesive output device of an adhesive coating system and a silicon steel laminated structure according to one embodiment of the present disclosure. The adhesive output device 106 includes an output pipe or nozzle 106a. When the silicon steel laminated structure 150 rotates, the output pipe or nozzle 106a is used to output the liquid adhesive 151 to the upper surface 150b of the uppermost silicon steel sheet 150a of the silicon steel laminated structure 150 in a dripping or spraying manner. The output pipe or nozzle 106a is located at a vertical projection position of the upper surface 150b of the uppermost silicon steel sheet 150a, which is any position between the end face 154a of the boot portion 154 and the outer edge of the silicon steel sheet in the radial direction RD. In some embodiments of the present invention, the output pipe or nozzle 106a is located at a vertical projection position of the upper surface 150b of the uppermost silicon steel sheet 150a, which is any position in the radial direction RD between the end face 154a and an edge of the stator tooth 152.

Reference is made to Figs. 2 and 5, and Fig. 5 is a cross-sectional view illustrating a positional relationship between an airflow output device of an adhesive coating system and a silicon steel laminated structure according to one embodiment of the present disclosure. The airflow output device 108 includes a nozzle 108a. In the circumferential direction of the silicon steel laminated structure 150, the nozzle 108a is located at a different position from the output pipe or nozzle 106a. Therefore, when the silicon steel laminated structure 150 rotates in the rotation direction CD, the output pipe or the nozzle 106a firstly outputs the liquid adhesive 151 to the upper surface 150b of the uppermost silicon steel sheet 150a of the silicon steel laminated structure 150, and then the nozzle 108a blowing air to the liquid adhesive 151, so that the liquid adhesive 151 is concentrated or gathered toward one side of the uppermost silicon steel sheet 150a of the silicon steel laminated structure 150 (e.g., concentrated toward the boot portion 154 side of the stator tooth 152 along the radial direction RD, or concentrated along the side edges of the stator tooth 152). In an embodiment of the present invention, an angle A1 between a direction of the nozzle 108a toward the uppermost silicon steel sheet 150a of the silicon steel laminated structure 150 and the upper surface 150b of the uppermost silicon steel sheet 150a of the silicon steel laminated structure 150 is in the range from 0 degree to 90 degrees. The angle A1 is preferably 50 degrees.

Reference is made to Figs. 2 and 6, and Fig. 6 is a cross-sectional view illustrating a positional relationship between another airflow output device of an adhesive coating system and a silicon steel laminated structure according to another embodiment of the present disclosure. The airflow output device 110 includes another nozzle 110a. In the circumferential direction of the silicon steel laminated structure 150, the nozzle 110a is located at a different position from the output pipe or nozzle 106a, and is also located at a different position from the nozzle 108a. Therefore, when the silicon steel laminated structure 150 rotates in the rotation direction CD, the output pipe or nozzle 106a firstly outputs the liquid adhesive 151 to the upper surface 150b of the uppermost silicon steel sheet 150a of the silicon steel laminated structure 150, and then the nozzle 108a blows air towards the liquid adhesive 151 to make the liquid adhesive 151 to be concentrated toward one side of the uppermost silicon steel sheet 150a of the silicon steel laminated structure 150 (e.g., concentrated toward the boot portion 154 side of the stator tooth 152 along the radial direction RD, or concentrated along the side edges of the stator tooth 152), and finally the nozzle 110a blows air to the liquid adhesive 151, causing the liquid adhesive 151 to be flown downward from the side of the uppermost silicon steel sheet 150a of the silicon steel laminated structure 150 (e.g., flown downward along the end face 154a of the boot portion 154 , or flown downward along the gap sides between adjacent stator teeth 152), so that the liquid adhesive 151 flows downward to infiltrate or fill the gaps between several stacked silicon steel sheets 150a. In an embodiment of the present invention, an angle A2 between a direction of the nozzle 110a towards the uppermost silicon steel sheet 150a of the silicon steel laminated structure 150 and the upper surface 150b of the uppermost silicon steel sheet 150a of the silicon steel laminated structure 150 is in the range from 90 degrees to 180 degrees. The angle A2 is preferably 100 degrees.

Reference is made to Fig. 7, which is a cross-sectional view illustrating a silicon steel laminated structure according to one embodiment of the present disclosure. This figure shows the silicon steel laminated structure 150 after the glue coating and strengthening process. The silicon steel laminated structure 150 includes a plurality of silicon steel sheets 150a of identical shapes that are aligned and stacked with each other. In some embodiments of the present invention, when the silicon steel laminated structure is a main portion of the motor rotor, each silicon steel sheet has a plurality of magnet grooves, and when the silicon steel sheets are stacked and viewed in the axial direction, the magnet grooves are partially misaligned with each other to improve the magnetic performance. The embodiment shown in Fig. 7 takes a motor stator as an example. The silicon steel laminated structure 150 has a height H along the axial direction AD and two upper and lower ends 150c. After the silicon steel laminated structure 150 is glued by the aforementioned method, not all the gaps between the silicon steel sheets 150a are glued and contain an adhesive layer 151a after solidification. There is an adhesive layer 151a in multiple gaps between several silicon steel sheets within a vertical distance h1 and a vertical distance h2 from the two ends 150c of the silicon steel laminated structure 150. In an embodiment of the invention, the vertical distance h1 is equal to one quarter of the height H, and the vertical distance h2 is equal to one quarter of the height H. In some embodiments of the present invention, the vertical distance h1 and the vertical distance h2 may also be unequal. These adhesive layers 151a bond and consolidate several stacked silicon steel sheets 150a that are close to the two ends 150c, thereby increasing the rigidity of the silicon steel sheets 150a and preventing the silicon steel laminated structure 150 from deforming or warping. Although this figure shows that the silicon steel laminated structure 150 is used as a motor stator, it does not rule out that the silicon steel laminated structure 150 can be used as the motor rotor. In some embodiments of the present invention, in addition to forming the adhesive layer 151a by applying adhesive to strengthen the structure, a laser welding can also be applied at or near the position where the nozzle 110a blows the liquid adhesive 151 (see Fig. 6). Several silicon steel sheets 150a that are close to the two ends 150c are melted with each other to further strengthen the structure and prevent the silicon steel sheets from warping.

In summary, a strengthening method of the motor silicon steel sheets disclosed herein does not use a mold to apply glue to the silicon steel laminated structure as a whole, but uses the adhesive coating system to apply adhesive to a part of the silicon steel laminated structure, so that the upper and lower silicon steel sheets in such part are firmly bonded to prevent deformation or warping of the silicon steel laminated structure.

## Claims

1. A strengthening method for motor silicon steel sheets **characterized by** comprising steps:
(A) providing (S302) a silicon steel laminated structure that comprises a plurality of silicon steel sheets aligned and stacked with each other;
(B) rotating (S304) the silicon steel laminated structure at a speed;
(C) when the silicon steel laminated structure rotates, outputting (S306) a liquid adhesive to an upper surface of an uppermost silicon steel sheet of the silicon steel laminated structure at a first position in a rotation direction of the silicon steel laminated structure;
(D) when the silicon steel laminated structure rotates, blowing (S308) air to the liquid adhesive at a first included angle at a second position in the rotation direction of the silicon steel laminated structure, such that the liquid adhesive is gathered to a boot portion of a stator tooth of the uppermost silicon steel sheet of the silicon steel laminated structure; and
(E) when the silicon steel laminated structure rotates, blowing (S310) air to the liquid adhesive at a second included angle at a third position in the rotation direction of the silicon steel laminated structure, such that the liquid adhesive flows downwards along an end surface of the boot portion of the stator tooth of the uppermost silicon steel sheet of the silicon steel laminated structure.

2. The strengthening method of claim 1, wherein the liquid adhesive in step (C) has a viscosity coefficient less than 20 centipoises.

3. The strengthening method of claim 1, wherein step (C) comprises: dripping the liquid adhesive by an output pipe or spraying the liquid adhesive by a nozzle.

4. The strengthening method of claim 1, wherein step (D) comprises: using a first nozzle to blow air in a first direction of the uppermost silicon steel sheet of the silicon steel laminated structure, and the first included angle between the first direction and the upper surface of the uppermost silicon steel sheet ranges from 0 degree to 90 degrees.

5. The strengthening method of claim 4, wherein step (E) comprises: using a second nozzle to blow air in a second direction of the uppermost silicon steel sheet of the silicon steel laminated structure, and the second included angle between the second direction and the upper surface of the uppermost silicon steel sheet ranges from 90 degrees to 180 degrees.

6. The strengthening method of claim 5, wherein a blowing pressure of the first nozzle in step (D) or the second nozzle in step (E) is less than 10 MPa.

7. The strengthening method of claim 1, wherein the first position in step (C) is any position along a radial direction of the silicon steel laminated structure from the boot portion to the stator tooth.

8. The strengthening method of claim 1, wherein the silicon steel laminated structure in step (C) has a main body, the stator tooth is connected to an inner edge of the main body, and the first position is any position from the inner edge of the main body to an outer edge of the uppermost silicon steel sheet along a radial direction of the silicon steel laminated structure.

9. The strengthening method of claim 1, wherein the speed of rotating the silicon steel laminated structure in step (B) ranges from 1 rpm to 300 rpm.

10. The strengthening method of claim 1, further comprising a step:
(F) turning (S314) over the silicon steel laminated structure so that another axial end of the silicon steel laminated structure faces upwards after step (E), and steps (B), (C), (D), (E) are performed again on the another axial end of the silicon steel laminated structure.

11. The strengthening method of claim 10, further comprising a step:
(G) maintaining (S312) the silicon steel laminated structure still for a period of time ranging from 1 minute to 300 minutes to solidify the liquid adhesive after step (E) and before step (F).

12. The strengthening method of claim 10, further comprising a step:
(H) applying (S316) a laser welding to the upper surface of the uppermost silicon steel sheet of the silicon steel laminated structure to tightly secure the uppermost silicon steel sheet to underneath silicon steel sheets, and the laser welding is applied at a position adjacent to the third position.

13. A silicon steel laminated structure (150) **characterized by** comprising a plurality of silicon steel sheets (150a) aligned and stacked with each other, wherein the aligned and stacked silicon steel sheets have two ends (150c) and a height H along an axial direction (AD), and the silicon steel sheets, which are disposed within a quarter H from the two ends (150c) in the axial direction (AD), are separated by adhesive layers (151a) in gaps between the silicon steel sheets, wherein the adhesive layers (151a) are formed by applying a liquid adhesive (151) to an upper surface of an uppermost silicon steel sheet of the silicon steel laminated structure (150) when rotating the silicon steel laminated structure (150), blowing air to the liquid adhesive (151) to gather to a boot portion (154) of a stator tooth (152) of the uppermost silicon steel sheet of the silicon steel laminated structure (150), and then blowing air to the liquid adhesive (151) on the upper surface, so that the liquid adhesive (151) flows downwards along an end face (154a) of the boot portion (154) of the stator tooth (152) for the quarter H.

## Patentansprüche

1. Verstärkungsverfahren für Motorsiliziumstahlbleche, **gekennzeichnet durch** die folgenden Schritte:
(A) Bereitstellen (S302) einer Siliziumstahl-Schichtstruktur, die eine Vielzahl von Siliziumstahlblechen umfasst, die miteinander ausgerichtet und gestapelt sind;
(B) Rotation (S304) der Siliziumstahl-Schichtstruktur mit einer Geschwindigkeit;
(C) wenn die Siliziumstahl-Schichtstruktur rotiert, Ausgeben (S306) eines flüssigen Klebstoffs auf eine Oberfläche eines obersten Siliziumstahlblechs der Siliziumstahl-Schichtstruktur an einer ersten Position in einer Rotationsrichtung der Siliziumstahl-Schichtstruktur;
(D) wenn die Siliziumstahl-Schichtstruktur rotiert, Blasen (S308) von Luft auf den flüssigen Klebstoff in einem ersten eingeschlossenen Winkel an einer zweiten Position in der Rotationsrichtung der Siliziumstahl-Schichtstruktur, sodass der flüssige Klebstoff zu einem Fußteil eines Statorzahns des obersten Siliziumstahlblechs der Siliziumstahl-Schichtstruktur gesammelt wird; und
(E) wenn die Siliziumstahl-Schichtstruktur rotiert, Blasen (S310) von Luft auf den flüssigen Klebstoff in einem zweiten eingeschlossenen Winkel an einer dritten Position in der Rotationsrichtung der Siliziumstahl-Schichtstruktur, sodass der flüssige Klebstoff entlang einer Endfläche des Fußteils des Statorzahns des obersten Siliziumstahlblechs der Siliziumstahl-Schichtstruktur nach unten fließt.

2. Verstärkungsverfahren nach Anspruch 1, wobei der flüssige Klebstoff in Schritt (C) einen Viskositätskoeffizienten von weniger als 20 Centipoise aufweist.

3. Verstärkungsverfahren nach Anspruch 1, wobei Schritt (C) umfasst: Tropfen des flüssigen Klebstoffs durch ein Ausgaberohr oder Sprühen des flüssigen Klebstoffs durch eine Düse.

4. Verstärkungsverfahren nach Anspruch 1, wobei Schritt (D) umfasst: Verwenden einer ersten Düse zum Blasen von Luft in eine erste Richtung des obersten Siliziumstahlblechs der Siliziumstahl-Schichtstruktur, und der erste eingeschlossene Winkel zwischen der ersten Richtung und der Oberfläche des obersten Siliziumstahlblechs reicht von 0 Grad bis 90 Grad.

5. Verstärkungsverfahren nach Anspruch 4, wobei Schritt (E) umfasst: Verwenden einer zweiten Düse zum Blasen von Luft in eine zweite Richtung des obersten Siliziumstahlblechs der Siliziumstahl-Schichtstruktur, und der zweite eingeschlossene Winkel zwischen der zweiten Richtung und der Oberfläche des obersten Siliziumstahlblechs reicht von 90 Grad bis 180 Grad.

6. Verstärkungsverfahren nach Anspruch 5, wobei ein Blasdruck der ersten Düse in Schritt (D) oder der zweiten Düse in Schritt (E) weniger als 10 MPa beträgt.

7. Verstärkungsverfahren nach Anspruch 1, wobei die erste Position in Schritt (C) eine beliebige Position entlang einer radialen Richtung der Siliziumstahl-Schichtstruktur vom Fußteil zum Statorzahn ist.

8. Verstärkungsverfahren nach Anspruch 1, wobei die Siliziumstahl-Schichtstruktur in Schritt (C) einen Hauptkörper aufweist, der Statorzahn mit einer Innenkante des Hauptkörpers verbunden ist, und die erste Position eine beliebige Position von der Innenkante des Hauptkörpers zu einer Außenkante des obersten Siliziumstahlblechs entlang einer radialen Richtung der Siliziumstahl-Schichtstruktur ist.

9. Verstärkungsverfahren nach Anspruch 1, wobei die Geschwindigkeit der Rotation der Siliziumstahl-Schichtstruktur in Schritt (B) von 1 U/min bis 300 U/min reicht.

10. Verstärkungsverfahren nach Anspruch 1, ferner umfassend einen Schritt:
(F) Umdrehen (S314) der Siliziumstahl-Schichtstruktur, sodass ein anderes axiales Ende der Siliziumstahl-Schichtstruktur nach oben zeigt, nach Schritt (E), und die Schritte (B), (C), (D), (E) werden erneut an dem anderen axialen Ende der Siliziumstahl-Schichtstruktur durchgeführt.

11. Verstärkungsverfahren nach Anspruch 10, ferner umfassend einen Schritt:
(G) Aufrechterhalten (S312) der Siliziumstahl-Schichtstruktur in Ruhe für einen Zeitraum, der von 1 Minute bis 300 Minuten reicht, um den flüssigen Klebstoff zu verfestigen, nach Schritt (E) und vor Schritt (F).

12. Verstärkungsverfahren nach Anspruch 10, ferner umfassend einen Schritt:
(H) Aufbringen (S316) eines Laserschweißens auf die Oberfläche des obersten Siliziumstahlblechs der Siliziumstahl-Schichtstruktur, um das oberste Siliziumstahlblech an darunter liegenden Siliziumstahlblechen fest zu sichern, und das Laserschweißen wird an einer Position angrenzend an die dritte Position aufgebracht.

13. Siliziumstahl-Schichtstruktur (150), **gekennzeichnet durch** eine Vielzahl von Siliziumstahlblechen (150a), die miteinander ausgerichtet und gestapelt sind, wobei die ausgerichteten und gestapelten Siliziumstahlbleche zwei Enden (150c) und eine Höhe H entlang einer axialen Richtung (AD) aufweisen, und die Siliziumstahlbleche, die innerhalb eines Viertels H von den beiden Enden (150c) in der axialen Richtung (AD) angeordnet sind, durch Klebstoffschichten (151a) in Spalten zwischen den Siliziumstahlblechen getrennt sind, wobei die Klebstoffschichten (151a) durch Aufbringen eines flüssigen Klebstoffs (151) auf eine Oberfläche eines obersten Siliziumstahlblechs der Siliziumstahl-Schichtstruktur (150) gebildet werden, wenn die Siliziumstahl-Schichtstruktur (150) rotiert wird, Blasen von Luft auf den flüssigen Klebstoff (151), um ihn zu einem Fußteil (154) eines Statorzahns (152) des obersten Siliziumstahlblechs der Siliziumstahl-Schichtstruktur (150) zu sammeln, und dann Blasen von Luft auf den flüssigen Klebstoff (151) auf der Oberfläche, sodass der flüssige Klebstoff (151) entlang einer Endfläche (154a) des Fußteils (154) des Statorzahns (152) für das Viertel H nach unten fließt.

## Revendications

1. Procédé de renforcement pour tôles d'acier au silicium pour moteur **caractérisé en ce qu'**il comprend les étapes:
(A) fournir (S302) une structure stratifiée d'acier au silicium qui comprend une pluralité de tôles d'acier au silicium alignées et empilées les unes avec les autres;
(B) faire tourner (S304) la structure stratifiée d'acier au silicium à une vitesse;
(C) lorsque la structure stratifiée d'acier au silicium tourne, délivrer (S306) un adhésif liquide à une surface supérieure d'une tôle d'acier au silicium supérieure de la structure stratifiée d'acier au silicium à une première position dans un sens de rotation de la structure stratifiée d'acier au silicium;
(D) lorsque la structure stratifiée d'acier au silicium tourne, souffler (S308) de l'air sur l'adhésif liquide à un premier angle d'incidence à une deuxième position dans le sens de rotation de la structure stratifiée d'acier au silicium, de sorte que l'adhésif liquide est rassemblé vers une partie de base d'une dent de stator de la tôle d'acier au silicium supérieure de la structure stratifiée d'acier au silicium; et
(E) lorsque la structure stratifiée d'acier au silicium tourne, souffler (S310) de l'air sur l'adhésif liquide à un deuxième angle d'incidence à une troisième position dans le sens de rotation de la structure stratifiée d'acier au silicium, de sorte que l'adhésif liquide s'écoule vers le bas le long d'une surface d'extrémité de la partie de base de la dent de stator de la tôle d'acier au silicium supérieure de la structure stratifiée d'acier au silicium.

2. Procédé de renforcement selon la revendication 1, dans lequel l'adhésif liquide à l'étape (C) a un coefficient de viscosité inférieur à 20 centipoises.

3. Procédé de renforcement selon la revendication 1, dans lequel l'étape (C) comprend: faire goutter l'adhésif liquide par un tuyau de sortie ou pulvériser l'adhésif liquide par une buse.

4. Procédé de renforcement selon la revendication 1, dans lequel l'étape (D) comprend: utiliser une première buse pour souffler de l'air dans une première direction de la tôle d'acier au silicium supérieure de la structure stratifiée d'acier au silicium, et le premier angle d'incidence entre la première direction et la surface supérieure de la tôle d'acier au silicium supérieure varie de 0 degré à 90 degrés.

5. Procédé de renforcement selon la revendication 4, dans lequel l'étape (E) comprend: utiliser une deuxième buse pour souffler de l'air dans une deuxième direction de la tôle d'acier au silicium supérieure de la structure stratifiée d'acier au silicium, et le deuxième angle d'incidence entre la deuxième direction et la surface supérieure de la tôle d'acier au silicium supérieure varie de 90 degrés à 180 degrés.

6. Procédé de renforcement selon la revendication 5, dans lequel une pression de soufflage de la première buse à l'étape (D) ou de la deuxième buse à l'étape (E) est inférieure à 10 MPa.

7. Procédé de renforcement selon la revendication 1, dans lequel la première position à l'étape (C) est n'importe quelle position le long d'une direction radiale de la structure stratifiée d'acier au silicium de la partie de base à la dent de stator.

8. Procédé de renforcement selon la revendication 1, dans lequel la structure stratifiée d'acier au silicium à l'étape (C) a un corps principal, la dent de stator est connectée à un bord intérieur du corps principal, et la première position est n'importe quelle position du bord intérieur du corps principal à un bord extérieur de la tôle d'acier au silicium supérieure le long d'une direction radiale de la structure stratifiée d'acier au silicium.

9. Procédé de renforcement selon la revendication 1, dans lequel la vitesse de rotation de la structure stratifiée d'acier au silicium à l'étape (B) varie de 1 tr/min à 300 tr/min.

10. Procédé de renforcement selon la revendication 1, comprenant en outre une étape:
(F) retourner (S314) la structure stratifiée d'acier au silicium de sorte qu'une autre extrémité axiale de la structure stratifiée d'acier au silicium soit orientée vers le haut après l'étape (E), et les étapes (B), (C), (D), (E) sont effectuées à nouveau sur l'autre extrémité axiale de la structure stratifiée d'acier au silicium.

11. Procédé de renforcement selon la revendication 10, comprenant en outre une étape:
(G) maintenir (S312) la structure stratifiée d'acier au silicium immobile pendant une période de temps allant de 1 minute à 300 minutes pour solidifier l'adhésif liquide après l'étape (E) et avant l'étape (F).

12. Procédé de renforcement selon la revendication 10, comprenant en outre une étape:
(H) appliquer (S316) un soudage au laser à la surface supérieure de la tôle d'acier au silicium supérieure de la structure stratifiée d'acier au silicium pour fixer fermement la tôle d'acier au silicium supérieure aux tôles d'acier au silicium sous-jacentes, et le soudage au laser est appliqué à une position adjacente à la troisième position.

13. Structure stratifiée d'acier au silicium (150) **caractérisée en ce qu'**elle comprend une pluralité de tôles d'acier au silicium (150a) alignées et empilées les unes avec les autres, dans laquelle les tôles d'acier au silicium alignées et empilées ont deux extrémités (150c) et une hauteur H le long d'une direction axiale (AD), et les tôles d'acier au silicium, qui sont disposées dans un quart H à partir des deux extrémités (150c) dans la direction axiale (AD), sont séparées par des couches d'adhésif (151a) dans des espaces entre les tôles d'acier au silicium, dans laquelle les couches d'adhésif (151a) sont formées en appliquant un adhésif liquide (151) à une surface supérieure d'une tôle d'acier au silicium supérieure de la structure stratifiée d'acier au silicium (150) lors de la rotation de la structure stratifiée d'acier au silicium (150), en soufflant de l'air sur l'adhésif liquide (151) pour le rassembler vers une partie de base (154) d'une dent de stator (152) de la tôle d'acier au silicium supérieure de la structure stratifiée d'acier au silicium (150), puis en soufflant de l'air sur l'adhésif liquide (151) sur la surface supérieure, de sorte que l'adhésif liquide (151) s'écoule vers le bas le long d'une face d'extrémité (154a) de la partie de base (154) de la dent de stator (152) sur le quart H.
